# EUROPEAN PATENT APPLICATION

(11) **EP 1 724 862 A2**
(43) Date of publication of application: **22.11.2006**
(21) Application number: 06010191.2
(22) Date of filing: 17.05.2006
(51) Int. Cl.: H01M 8/00, H01M 8/04, H01M 8/10

(54) **Fuel cell system and controlling method therefor**

(30) Priority: 20.05.2005 JP 2005148127
(71) Applicant: YAMAHA HATSUDOKI KABUSHIKI KAISHA, Iwata-shi, Shizuoka-ken (JP)
(72) Inventor: Kohda, Hideo, Iwata-shi Shizuoka-ken (JP); Muramatsu, Yasuyuki, Iwata-shi Shizuoka-ken (JP); Takahashi, Arato, Iwata-shi Shizuoka-ken (JP)
(74) Representative: Grünecker, Kinkeldey, Stockmair & Schwanhäusser Anwaltssozietät

(57) **Abstract**

There is provided a fuel cell system capable of reducing the amount of fuel aqueous solution flowing out of the aqueous solution tank after power generation is stopped, and a control method for the system. In a fuel cell system 100, an aqueous solution tank 130 and a cell stack 102 are connected with each other by pipes P3-P5 which constitute a siphon. By reverse-driving an aqueous solution pump 146 after power generation is stopped, gas in the aqueous solution tank 130 is introduced via the pipes P17-P19 and an intake 165 into the pipe P4 in which methanol aqueous solution is siphoned. As the gas introduced into the pipe P4 reaches the highest portion in the pipe P3, the siphoning ceases to stop the flow of methanol aqueous solution.

## Description

### BACKGROUND OF THE INVENTION

### Field of the Invention

The present invention relates to fuel cell systems and a control method therefor. More specifically, the present invention relates to a fuel cell system in which fuel aqueous solution is sent from the aqueous solution tank to the fuel cell, and a control method for the system.

### Description of the Related Art

In recent years, proposals have been made for fuel cell systems in which fuel aqueous solution is sent from an aqueous solution tank to the fuel cell. Patent Document 1 discloses an example of these.

According to the fuel cell system in Patent Document 1, a fuel cell stack, which is heavy, is disposed below an aqueous tank for a low center of gravity, thereby achieving a stable layout. During power generation, fuel aqueous solution is supplied from the aqueous solution tank placed above to an anode in the fuel cell stack by an aqueous solution pump inserted in an aqueous solution pipe. After the power generation is stopped (after the aqueous solution pump is stopped), fuel aqueous solution in the anode area decreases as the solution oozes out to the cathode side due to so called crossover. Normally, the aqueous solution pump which is not in operation cannot block the flow of fuel aqueous solution completely, so after the power generation is stopped, fuel aqueous solution flows out of the aqueous solution tank to the fuel cell stack to the extent that the amount of fuel aqueous solution which has flown away from the anode due to the crossover.

Patent Document 1: WO2005/004267

However, if there is an outflow of fuel aqueous solution from the aqueous solution tank after the power generation is stopped, it is likely that there will not be a sufficient amount of fuel aqueous solution in the aqueous solution tank when the system is re-started. This will cause a problem that the system cannot generate power.

### SUMMARY OF THE INVENTION

Therefore, a primary object of the present invention is to provide a fuel cell system capable of reducing the amount of fuel aqueous solution which flows out of the aqueous solution tank after power generation is stopped, and to provide a control method therefor.

According to an aspect of the present invention, there is provided a fuel cell system including: an aqueous solution tank which stores fuel aqueous solution; a fuel cell in which at least part of its anode is lower than a liquid level in the aqueous solution tank; an aqueous solution pipe which is for supplying the anode with the fuel aqueous solution and has a part higher than the liquid level; and introduction means for introducing gas into the aqueous solution pipe after starting a power generation stopping process of the fuel cell.

According to another aspect of the present invention, there is provided a method of controlling a fuel cell system which includes: an aqueous solution tank which stores fuel aqueous solution; a fuel cell in which at least part of its anode is lower than a liquid level in the aqueous solution tank; and an aqueous solution pipe which connects the aqueous solution tank with the fuel cell and has a part higher than the liquid level. In this method, gas is introduced into the aqueous solution pipe after starting a power generation stopping process of the fuel cell.

According to the present invention, at least part of the anode of the fuel cell is lower than the liquid level in the aqueous solution tank, and part of the aqueous solution pipe is higher than the liquid level in the aqueous solution tank. With this arrangement, the amount of fuel aqueous solution lost from the anode due to the crossover is replenished automatically and continuously by a siphoning flow from the aqueous solution tank to the anode. Further, by introducing gas into the aqueous solution pipe in which fuel aqueous solution is flowing due to the siphon effect, after starting a power generation stopping process, it becomes possible to reduce the amount of fuel aqueous solution which flows toward the anode. Therefore, it becomes possible to reduce the amount of fuel aqueous solution which flows out of the aqueous solution tank after power generation is stopped, and to generate power quickly and reliably when the system is re-started.

Preferably, the introduction means introduces the gas into the aqueous solution pipe in a predetermined amount of time after starting the power generation stopping process. By waiting for a period of time as described thereby allowing the gas and fuel aqueous solution to separate from each other within the aqueous solution tank, it becomes possible to reliably introduce the gas into the aqueous solution pipe.

Further preferably, the gas is introduced to a place within the aqueous solution pipe which is higher than the liquid level in the aqueous solution tank. This enables to terminate the siphoning thereby stopping the flow of fuel aqueous solution out of the aqueous solution tank. Therefore, it becomes possible to further reduce the amount of fuel aqueous solution which flows out of the aqueous solution tank after power generation is stopped.

Further, preferably, the introduction means includes open/close means for setting the fuel cell system to an open state where the aqueous solution pipe is open to the gas, or to a closed state where the aqueous solution pipe is not open to the gas. In this case, the gas can be introduced easily into the aqueous solution pipe by causing the open/close means to set the fuel cell system to the open state.

Preferably, the introduction means includes an aqueous solution pump inserted into the aqueous solution pipe at a location closer to the aqueous solution tank than a location where the gas is introduced into the aqueous solution pipe, for pumping the fuel aqueous solution toward the fuel cell or toward the aqueous solution tank. In this case, it becomes possible to force the gas into the aqueous solution pipe by controlling the aqueous solution pump to pump the fuel aqueous solution toward the aqueous solution tank, and to reduce the amount of fuel aqueous solution which flows toward the anode, quickly and reliably. Also, as the aqueous solution pump sends the fuel aqueous solution in the aqueous solution pipe toward the aqueous solution tank, the fuel aqueous solution in the aqueous solution pipe is returned to the aqueous solution tank. Therefore, it becomes possible to further reduce the amount of fuel aqueous solution which flows out of the aqueous solution tank after power generation is stopped.

Further preferably, the introduction means includes an introduction pipe which connects a gas space in the aqueous solution tank with the aqueous solution pipe. This enables to introduce the gas from within the aqueous solution tank into the aqueous solution pipe via the introduction pipe, which keeps oxygen concentration in the gas supplied to the aqueous solution pipe at a low level. Therefore, it becomes possible to reduce oxidization at the anode which would lead to production of harmful substances such as aldehyde and formic acid. This advantage offers significant effect especially in cases where carbon dioxide which results in the reaction at the anode is returned to the aqueous solution tank.

Further, preferably, the fuel cell system further includes an air filter for removing impurities included in air introduced from outside the fuel cell system, and the gas from the outside is introduced into the aqueous solution tank via the air filter. In this case, since the air filter removes impurities from the gas before it is introduced into the aqueous solution tank, it becomes possible to introduce clean gas into the aqueous solution pipe, enabling to prevent the impurities from causing damage or failure of the fuel cell system.

Direct methanol fuel cell systems, in which fuel aqueous solution is supplied directly to the fuel cell, tend to have crossover problems after power generation is stopped, resulting in loss of fuel aqueous solution from the aqueous solution tank. Since the present invention can reduce the amount of fuel aqueous solution which flows out of the aqueous solution tank after power generation is stopped, the invention is particularly effective to direct methanol fuel cell systems.

Generally in transporting equipment such as two-wheeled vehicle, it is preferable that the fuel cell, which is a heavy component, be disposed at a place as low as possible for the sake of vehicle running stability, but this leads to the problem of losing fuel aqueous solution from the aqueous solution tank after power generation is stopped. Since the fuel cell system according to the present invention can reduce the amount of methanol aqueous solution which flows out of the aqueous solution tank after power generation is stopped, the system can be used suitably for transportation equipment in which the fuel cell must be placed at a low position.

The above-described objects, other objects, characteristics, aspects and advantages of the present invention will become clearer from the following detailed description of embodiments to be made with reference to the attached drawings.

### BRIEF DESCRIPTION OF THE DRAWINGS

Fig. 1 is a left side view of a two-wheeled vehicle equipped with a fuel cell system according to the present invention;
Fig. 2 is a perspective view taken from front left, showing how the fuel cell system is mounted on a two-wheeled vehicle frame;
Fig. 3 is a perspective view taken from rear left, showing how the fuel cell system is mounted on the two-wheeled vehicle frame;
Fig. 4 is a left side view showing the piping in the fuel cell system;
Fig. 5 is a right side view showing the piping in the fuel cell system;
Fig. 6 is a perspective view taken from front left, showing the piping in the fuel cell system;
Fig. 7 is a perspective view taken from front right, showing the piping in the fuel cell system;
Fig. 8 is a diagram of a fuel cell stack;
Fig. 9 is a diagram of an individual fuel cell;
Fig. 10 is a diagram showing an anode side (formed with four grooves) of a separator;
Fig. 11 is a diagram showing a cathode side (formed with six grooves) of the separator;
Fig. 12 is a system diagram showing the piping of the fuel cell system;
Fig. 13 is a flowchart showing an operation in the fuel cell system when power generation is stopped; and
Fig. 14 is a diagram showing another example of piping in the fuel cell system; Fig. 14(a) shows a case where an introduction pipe is connected with a more upstream portion than the highest portion of an aqueous solution pipe whereas Fig. 14(b) shows a case where an introduction pipe is connected with a bulge formed at the highest portion of the aqueous solution pipe.

### DETAILED DESCRIPTION OF THE PREFERRED EMBODIMENTS

Hereinafter, preferred embodiments of the present invention will be described, with reference to the drawings. The embodiments are cases in which a fuel cell system according to the present invention is equipped in a two-wheeled vehicle 10 as an example of transport equipment. The description will first cover the two-wheeled vehicle 10. It is noted that the terms left and right, front and rear, up and down as used in the embodiments of the present invention are determined from the normal state of riding, i.e., as viewed by the rider sitting on the rider's seat of the two-wheeled vehicle 10, with the rider facing toward a handle 24.

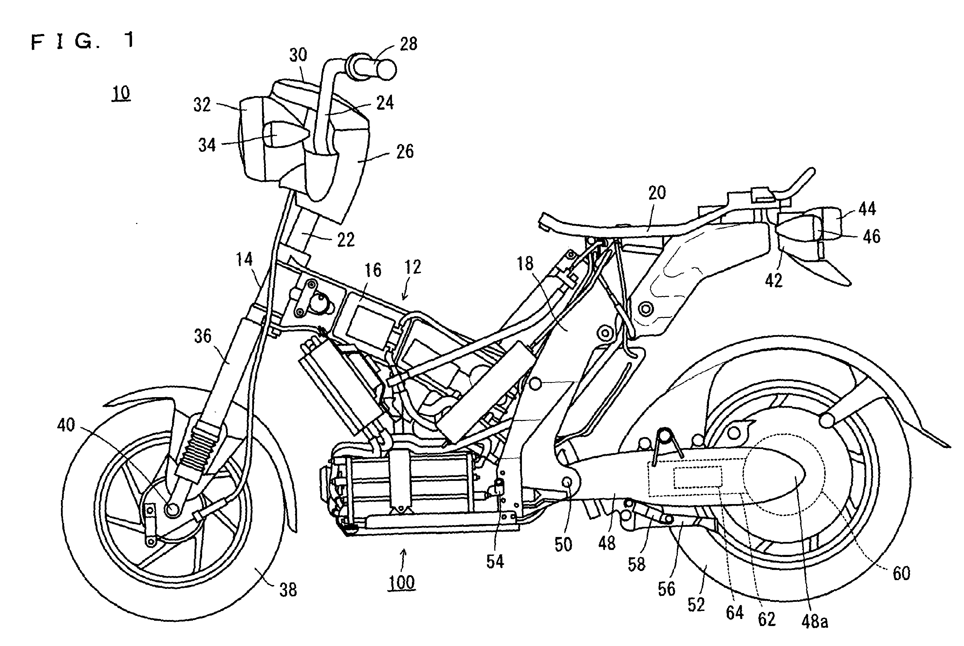

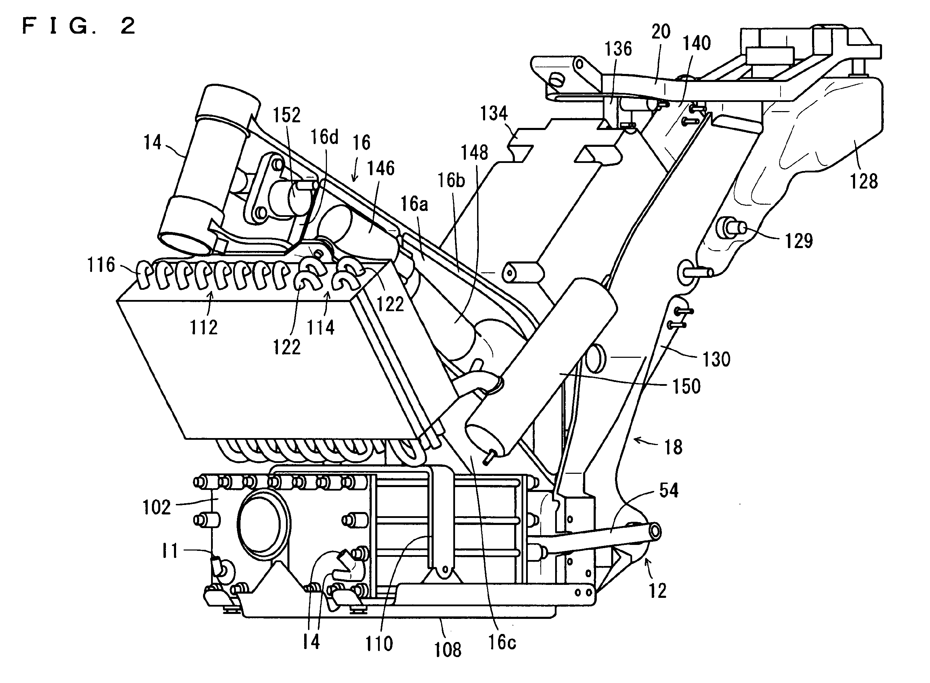

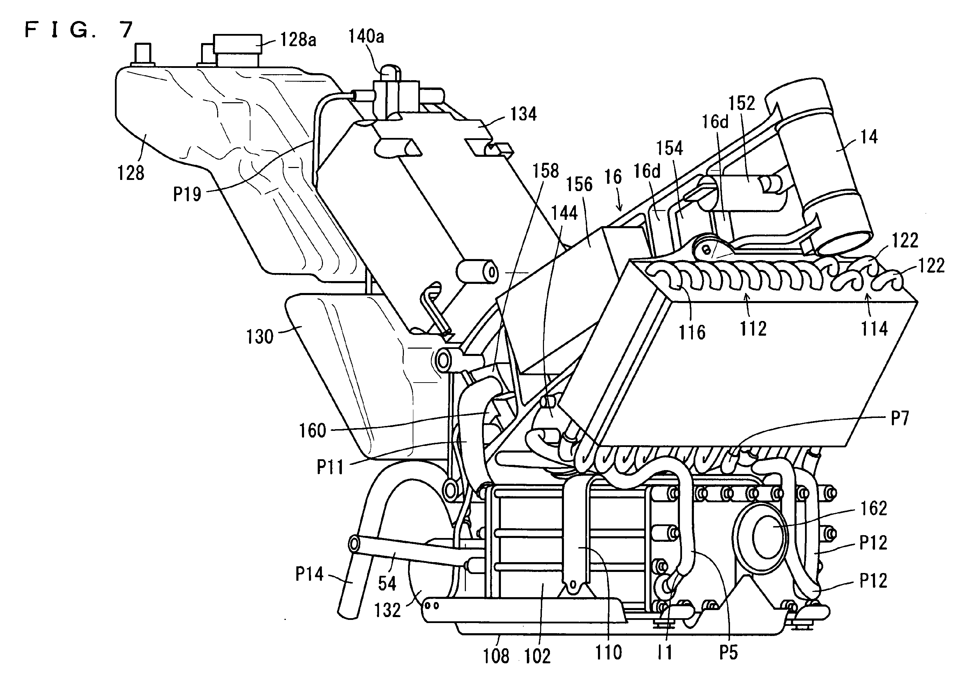

Referring to Fig. 1 through Fig. 7, the two-wheeled vehicle 10 includes a vehicle frame 12. The vehicle frame 12 includes a head pipe 14, a front frame 16 which has an I-shaped vertical section and extends in a rearward and downward direction from the head pipe 14, a rear frame 18 which is connected with a rear end of the front frame 16 and rising in a rearward and upward direction, and a seat rail 20 which is attached to a top end of the rear frame 18. The front frame 16 has its rear end connected with a location on the rear frame 18 which is close to but slightly away from a center portion of the rear frame 18 toward a lower end. The front frame 16 and the rear frame 18 combine to form a substantially Y-shape structure as viewed from the side.

The front frame 16 includes: a plate member 16a which has a width in the vertical directions and extends in a rearward and downward direction, perpendicularly to the lateral directions of the vehicle; flanges 16b, 16c which are formed respectively at an upper end edge and a lower end edge of the plate member 16a, extend in a rearward and downward direction and have a width in the lateral directions; reinforcing ribs 16d protruding from both surfaces of the plate member 16a; and a connecting region 16e at a rear end for connecting the rear frame 18 with bolts for example. The reinforcing ribs 16d and the flanges 16b, 16c serve as storage walls, providing compartments on both surfaces of the plate member 16a as storage spaces for components of a fuel cell system 100 to be described later.

The rear frame 18 includes plate members 18a, 18b which extend in a rearward and upward direction, have a width in the front and rear directions, and sandwiches the connecting region 16e of the front frame 16.

As shown in Fig. 1, a steering shaft 22 is pivotably inserted in the head pipe 14 for steering the vehicle. A handle support 26 is provided at an upper end of the steering shaft 22, to which a handle 24 is fixed. Grips 28 are provided at two ends of the handle 24. The right-hand grip 28 serves as a rotatable throttle grip.

A display/operation board (hereinafter simply called a meter) 30 is provided in front of the handle 24 of the handle support 26. The meter 30 is an integrated dashboard including a display provided by e.g. a liquid crystal display, for providing the rider with a variety of information concerning the ride, and input devices via which the rider inputs a variety of information. A head lamp 32 is provided below the meter 30 at the handle support 26, and a flasher lamp 34 is provided on each of the left and right sides of the head lamp 32.

A pair of left and right front forks 36 extend downwardly from a bottom end of the steering shaft 22. Each of the front forks 36 includes a bottom end supporting a front wheel 38 via a front wheel shaft 40. The front wheel 38 is suspended by the front forks 36, and is freely rotatable around the front wheel shaft 40.

On the other hand, a frame-like seat rail 20 is attached to a rear end of the rear frame 18. The seat rail 20 is fixed on an upper end of the rear frame 18 by welding for example, generally in the front and rear directions. An unillustrated seat is provided pivotably on the seat rail 20. A mounting bracket 42 is fixed to a rear end of the seat rail 20. The mounting bracket 42 supports a tail lamp 44 and a pair of left and right flasher lamps 46.

The rear frame 18 includes a lower end which pivotably supports a rear arm 48 via a pivot shaft 50. The rear arm 48 has a rear end 48a which rotatably supports a driving wheel i.e., a rear wheel 52, on a shaft. The rear arm 48 and the rear wheel 52 are suspended with an unillustrated rear cushion with respect to the rear frame 18.

A pair of footrest attaching bars 54 are provided at a lower front portion of the rear frame 18, to protrude in the left and right directions from the rear frame 18 respectively. An unillustrated footrest is attached to each of the footrest attaching bars 54. Behind the footrest attaching bars 54, a main stand 56 is pivotably supported by the rear arm 48. The main stand 56 is biased in a closing direction by a return spring 58.

Inwardly of the rear end 48a of the rear arm 48, there are disposed an electric motor 60 of an axial gap type, for example, which is connected with the rear wheel 52 to rotate the rear wheel 52, and a drive unit 62 which is electrically connected with the electric motor 60. The drive unit 62 includes a controller 64 for controlling the rotating drive of the electric motor 60.

The two-wheeled vehicle 10 as described is equipped with a fuel cell system 100 along the vehicle frame 12. The fuel cell system 100 generates electric energy for driving the electric motor 60 and other components.

Hereinafter, the fuel cell system 100 will be described.

The fuel cell system 100 is a direct methanol fuel cell system which uses methanol (an aqueous solution of methanol) directly without reformation for power generation.

The fuel cell system 100 includes a fuel cell stack (hereinafter simply called cell stack) 102 mounted below the front frame 16.

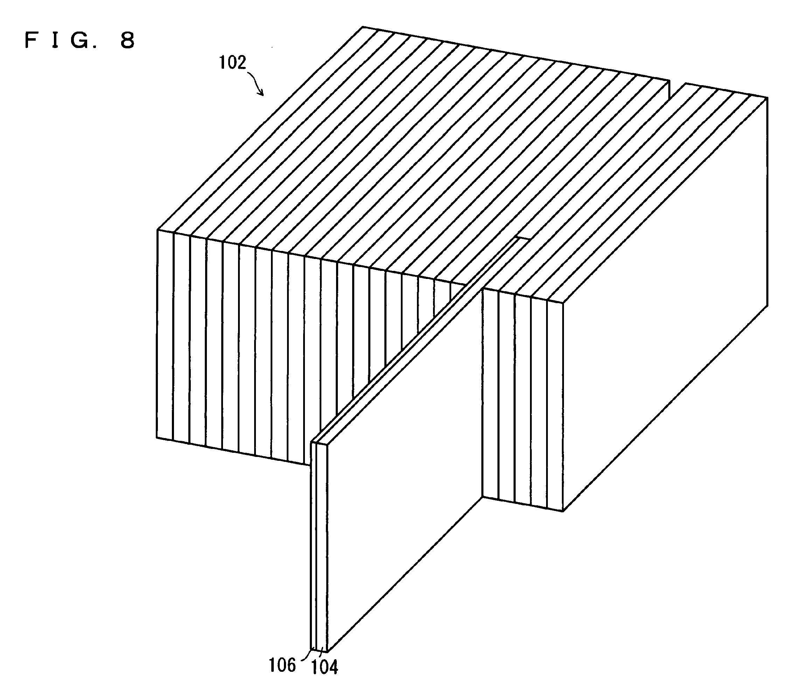

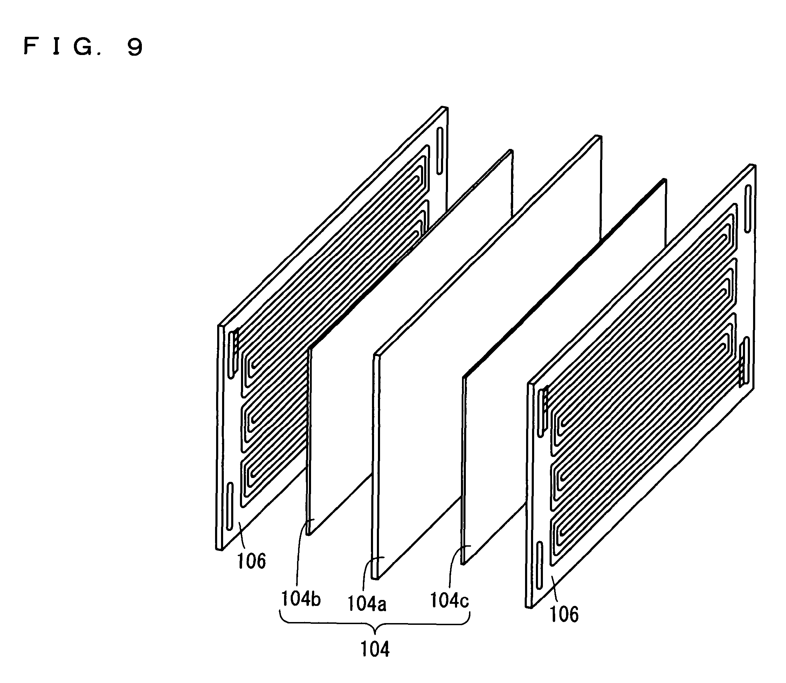

As shown in Fig. 8 and Fig. 9, the cell stack 102 includes a plurality of fuel cells (individual fuel cells) 104 layered (stacked) in alternation with separators 106. Each fuel cell is capable of generating electric energy through electrochemical reactions between hydrogen and oxygen based on methanol. Each fuel cell 104 in the cell stack 102 includes electrolyte (electrolyte film) 104a provided by a solid polymer film for example, and a pair of an anode (fuel electrode) 104b and a cathode (air electrode) 104c opposed to each other, with the electrolyte 104a in between. The anode 104b and the cathode 104c each include a platinum catalyst layer provided on the side closer to the electrolyte 104a.

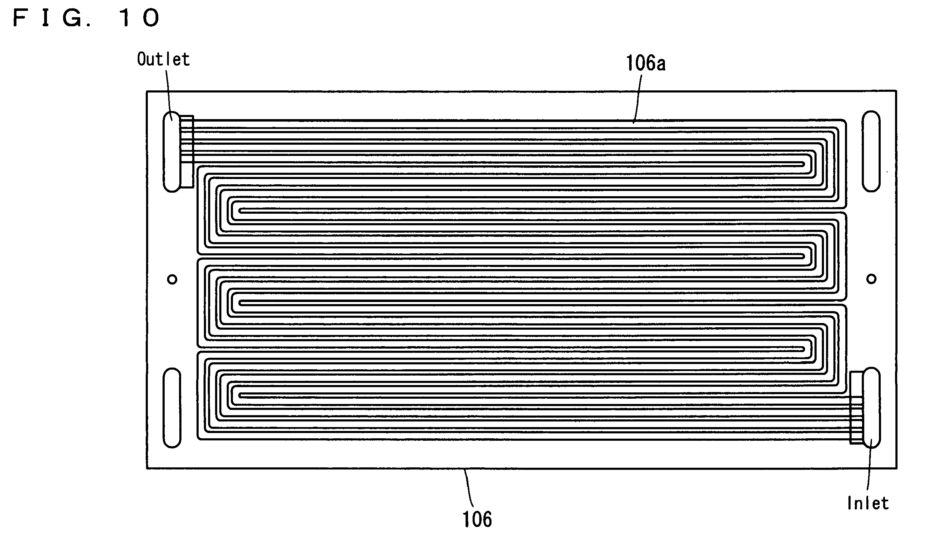

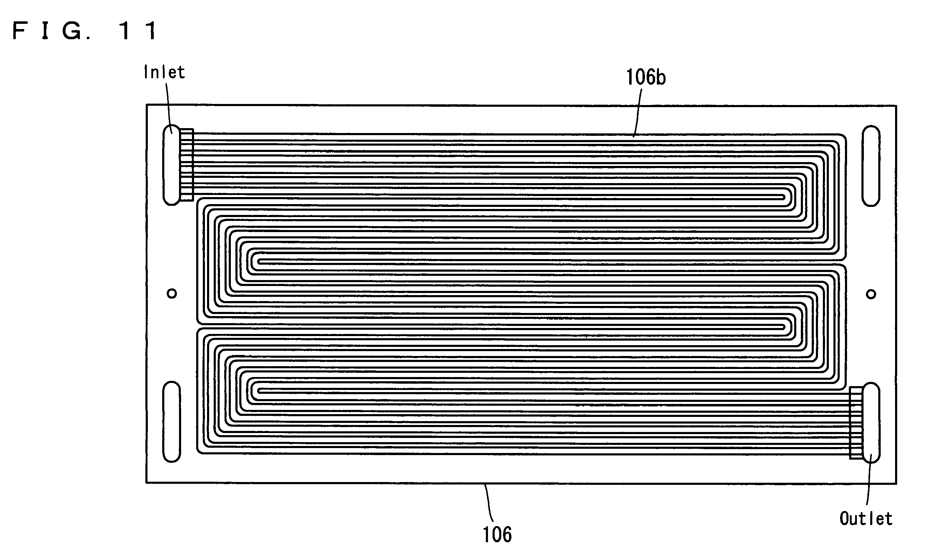

The separator 106 has an anode-facing main surface formed with four meandering grooves 106a as shown in Fig. 10, and a cathode-facing main surface formed with six meandering grooves 106b as shown in Fig. 11. In the present embodiment, the grooves 106a in each separator 106 serve as flow paths in the cell stack 102 for supplying the anode 104b with methanol aqueous solution.

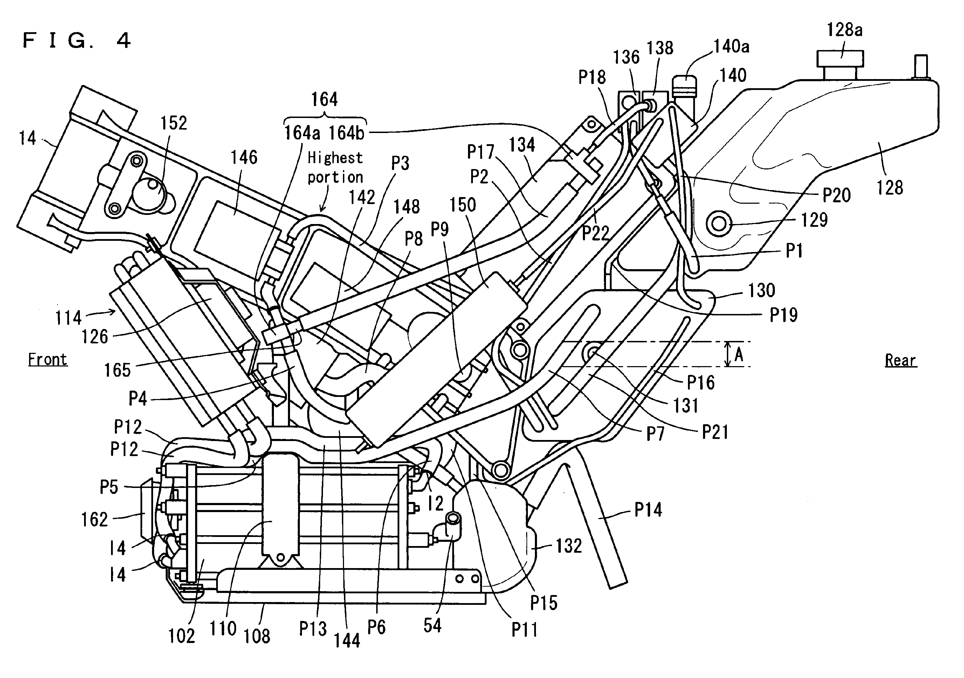

As shown in Fig. 4, etc., the cell stack 102 is placed on a skid 108. The skid 108 is supported by a stay stack 110 hung from the flange 16c of the front frame 16.

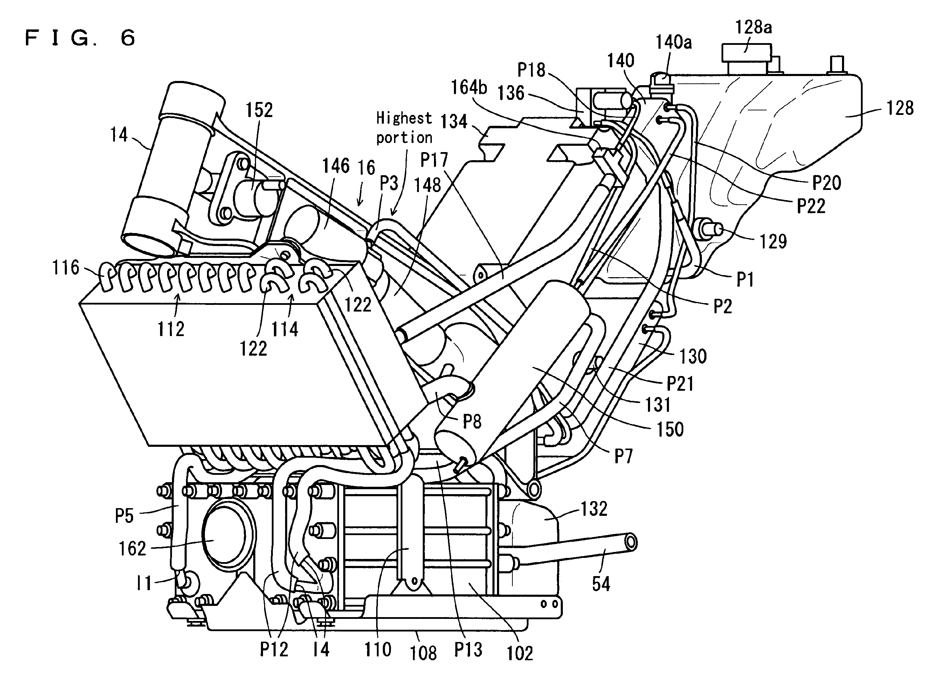

As shown in Fig. 6, etc., an aqueous solution radiator 112 and a gas-liquid separation radiator 114 are disposed below the front frame 16, above the cell stack 102. The radiators 112 and 114 are integral with each other, having a front surface facing ahead of the vehicle in a slightly downward direction. The radiators 112 and 114 have a plurality of plate-like fins (not illustrated) which are perpendicular to the front surface. The radiators 112 and 114 as the above can receive sufficient winds while the vehicle is running.

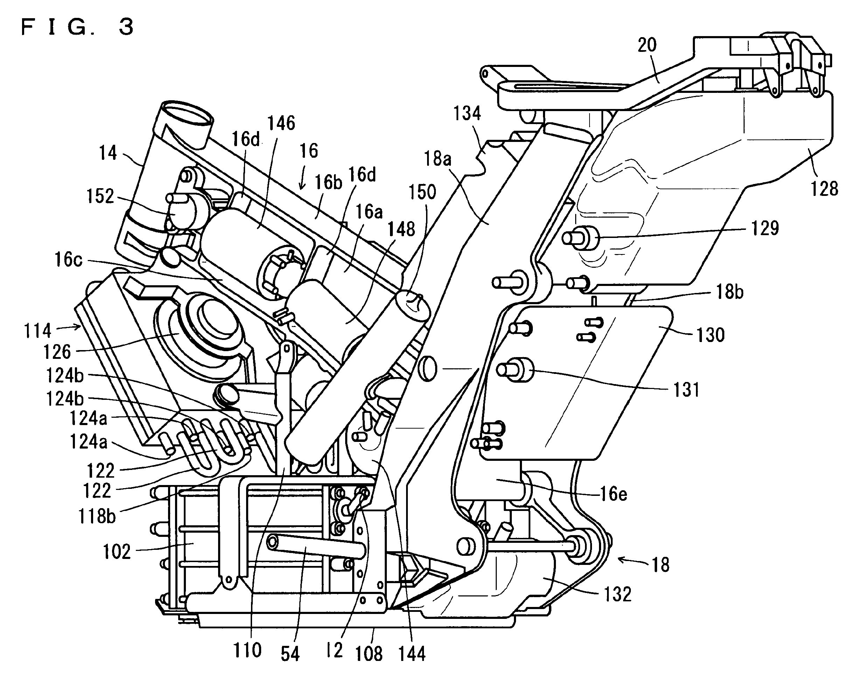

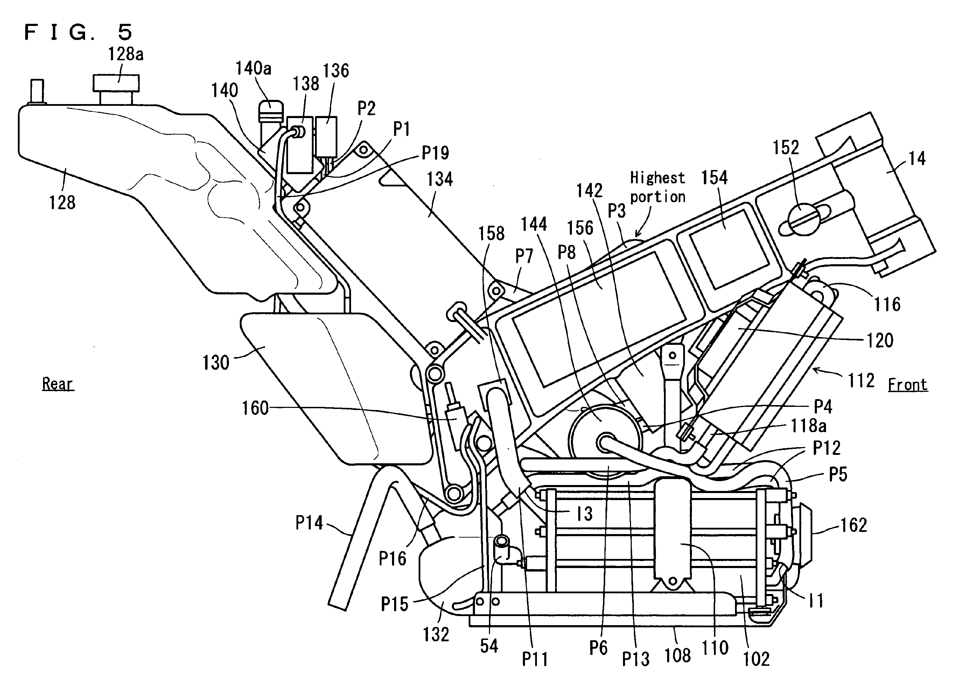

The radiator 112 includes a radiator pipe 116 formed in a swirling pattern. The radiator pipe 116 is a single continuous pipe formed by welding a plurality of straight pipe members made of stainless steel for example, with a plurality of generally U shaped pipe joints, extending from an inlet 118a (See Fig. 5) through an outlet 118b (See Fig. 3). The radiator 112 has a rear surface faced by a cooling fan 120 opposed to the radiator pipe 116.

Likewise, the radiator 114 includes two radiator pipes 122 each formed in a meander pattern. Each radiator pipe 122 is a single continuous pipe formed by welding a plurality of straight pipe members made of stainless steel for example, with a plurality of generally U shaped pipe joints, extending from an inlet 124a (See Fig. 3) through an outlet 124b (See Fig. 3). The radiator 114 has a rear surface faced by a cooling fan 126 opposed to the radiator pipe 122.

Returning to Fig. 1 through Fig. 7, and referring mainly to Fig. 3, a fuel tank 128, an aqueous solution tank 130 and a water tank 132 are disposed in this order from top to down, behind the connecting region 16e of the front frame 16. The fuel tank 128, the aqueous solution tank 130 and the water tank 132 are formed by PE (polyethylene) blow molding, for example.

The fuel tank 128 is below the seat rail 20 and is attached to a rear end of the seat rail 20. The fuel tank 128 contains a methanol fuel (high concentration aqueous solution of methanol) having a high concentration level (containing methanol at approximately 50 wt%, for example) which is used as fuel for the electrochemical reaction in the cell stack 102. The fuel tank 128 has a lid 128a on its upper surface. The lid 128a is removed when replenishing the tank with methanol fuel.

The aqueous solution tank 130 is behind and above the cell stack 102, below the fuel tank 128, and is attached to the rear frame 18. As understood from Fig. 4, the aqueous solution tank 130 is disposed so that its bottom surface is higher than the upper surface of the cell stack 102. Therefore, the entire cell stack 102 is lower than the liquid level of methanol aqueous solution in the aqueous solution tank 130. The aqueous solution tank 130 contains methanol aqueous solution, which is a solution of the methanol fuel from the fuel tank 128 diluted to a suitable concentration (containing methanol at approximately 3 wt%, for example) for the electrochemical reaction in the cell stack 102.

The fuel tank 128 is provided with a level sensor 129 for detecting the height of liquid surface of the methanol fuel in the fuel tank 128. The aqueous solution tank 130 is provided with a level sensor 131 for detecting the height of liquid surface of the methanol aqueous solution in the aqueous solution tank 130. By detecting the height of liquid surfaces with the level sensors 129, 131, the amount of liquids in the tanks can be detected. The liquid surface in the aqueous solution tank 130 is controlled to stay within a range indicated by a letter A in Fig. 4 for example.

The water tank 132 is between the plate members 18a and 18b of the rear frame 18 and behind the cell stack 102.

In front of the fuel tank 128 and above the flange 16b of the front frame 16 is a secondary battery 134. The secondary battery 134 stores the electric energy generated by the cell stack 102, and supplies the stored electric energy to the electric components in response to commands from the controller 156 (to be described later). For example, the secondary battery 134 supplies electric energy to peripheral components and the drive unit 62.

Above the secondary battery 134 and below the seat rail 20 is disposed a fuel pump 136 and a measurement valve 138. Further, a catch tank 140 is disposed above the aqueous solution tank 130.

The catch tank 140 has a lid 140a on its upper surface. If the fuel cell system 100 has not ever been started (when the aqueous solution tank 130 is empty) for example, the lid 140a is removed to supply the tank with methanol aqueous solution. The catch tank 140 is formed by PE (polyethylene) blow molding, for example.

An air filter 142 is disposed in a space surrounded by the front frame 16, the cell stack 102 and the radiators 112, 114 for removing impurities such as dust contained in gas. Behind and below the air filter 142 is disposed an aqueous solution filter 144.

As shown Fig. 4, an aqueous solution pump 146 and an air pump 148 are housed in the storage space on the left side of the front frame 16. On the left side of the air pump 148 is an air chamber 150. The aqueous solution pump 146 which is provided by a rotary pump for example, rotates in a normal direction when it pumps methanol aqueous solution toward the cell stack 102 whereas it rotates in a reverse direction when pumping methanol aqueous solution toward the aqueous solution tank 130.

Further, as shown in Fig. 5, a main switch 152, a DC/DC converter 154, a controller 156, a rust prevention valve 158 and a water pump 160 are disposed in this order from front to rear in the storage space on the right side of the front frame 16. The main switch 152 penetrates the storage space in the front frame 16 from right to left. In front of the cell stack 102 is a horn 162.

With the above-described layout, reference will now be made to Fig. 4 through Fig. 7 and Fig. 12 to describe piping in the fuel cell system 100.

The fuel tank 128 and the fuel pump 136 are connected with each other by a pipe P1. The fuel pump 136 and the aqueous solution tank 130 are connected with each other by a pipe P2. The pipe P1 connects a left side surface lower end of the fuel tank 128 with a left side surface lower end of the fuel pump 136. The pipe P2 connects a left side surface lower end of the fuel pump 136 with a left side surface lower end of the aqueous solution tank 130. By driving the fuel pump 136, methanol fuel in the fuel tank 128 is supplied to the aqueous solution tank 130 via the pipes P1, P2.

As shown in Fig. 4, the aqueous solution tank 130 and the aqueous solution pump 146 are connected with each other by a pipe P3 which extends in a forward and upward direction and then in a downward direction. As understood from Fig. 4, the pipe P3 connects with the aqueous solution tank 130 at a location lower than a liquid level (the minimum level in Range A) in the aqueous solution tank 130. From this connection point, the pipe P3 extends to reach a point higher than a liquid level (the maximum level in Range A) in the aqueous solution tank 130. The aqueous solution pump 146 and the aqueous solution filter 144 are connected with each other by a pipe P4 which extends downward while curving in a rearward direction. The pipes P3 and P4 substantially form an inversed U shape as viewed from side. Also, as shown in Fig. 5, the aqueous solution filter 144 and the cell stack 102 are connected with each other by a pipe P5 which extends in a forward and downward direction and then in a downward direction. The pipe P3 connects a left side surface lower corner of the aqueous solution tank 130 with a rear portion of the aqueous solution pump 146. The pipe P4 connects a rear portion of the aqueous solution pump 146 with a left side surface of the aqueous solution filter 144. The pipe P5 connects a right side surface of the aqueous solution filter 144 with an anode inlet I1 located at a front surface right lower corner of the cell stack 102. By driving the aqueous solution pump 146 in the normal rotating direction, methanol aqueous solution from the aqueous solution tank 130 is pumped from the pipe P3 side toward the pipe P4 side. Then, the aqueous solution filter 144 removes impurities from the methanol aqueous solution, and the solution flows through the pipe P5 to the cell stack 102.

The cell stack 102 and the aqueous solution radiator 112 are connected with each other by a pipe P6, and the radiator 112 and the aqueous solution tank 130 are connected with each other by a pipe P7. The pipe P6 connects an anode outlet I2 located at a rear surface upper left corner of the cell stack 102 with an inlet 118a (See Fig. 5) of the radiator pipe 116 which comes out of a lower surface right side end of the radiator 112. The pipe P7 connects an outlet 118b (See Fig. 3) of the radiator pipe 116 which comes out of a lower surface of the radiator 112 with a left side surface upper corner of the aqueous solution tank 130. Unused methanol aqueous solution and carbon dioxide discharged from the cell stack 102 flow through the pipe P6 to the radiator 112 where they are cooled, and then returned via the pipe P7 to the aqueous solution tank 130. With this arrangement, the temperature of methanol aqueous solution in the aqueous solution tank 130 can be deceased.

The pipes P1 through P7 serve primarily as a flow path for the fuel. In this embodiment, the pipes P3 through P5 constitute an aqueous solution pipe X. As understood from Fig. 4, the pipes P3 through P5 as a whole extend from a place lower than the liquid level in the aqueous solution tank 130, passes a place higher than the liquid level in the aqueous solution tank 130, and then curves in a downward direction, connecting the aqueous solution tank 130 and the cell stack 102 with each other. In other words, the aqueous solution pipe X is provided to work as a siphon. Thus, due to the siphon effect, methanol aqueous solution flows from the aqueous solution tank 130 to the cell stack 102 even after the aqueous solution pump 146 has been stopped.

The air filter 142 and the air chamber 150 are connected with each other by a pipe P8. The air chamber 150 and the air pump 148 are connected with each other by a pipe P9, the air pump 148 and the rust prevention valve 158 are connected with each other by a pipe P10 whereas the rust prevention valve 158 and the cell stack 102 are connected with each other by a pipe P11. The pipe P8 connects a rear portion of the air filter 142 with a portion of the air chamber 150 which is slightly ahead of the center of the chamber. The pipe P9 connects a lower center portion of the air chamber 150 with a rear portion of the air pump 148. The pipe P10 connects the air pump 148 located on the left side of the plate member 16a in the front frame 16 with the rust prevention valve 158 located on the right side of the plate member 16a. The pipe P11 connects the rust prevention valve 158 with a cathode inlet I3 located on a rear surface upper right end of the cell stack 102. When the cell stack 102 generates power, the rust prevention valve 158 is opened. By driving the air pump 148 under this condition, air containing oxygen is introduced from outside. The introduced air is purified by the air filter 142, then flows through the pipe P8, the air chamber 150 and the pipe P9 to the air pump 148, and then through the pipe P10, the rust prevention valve 158 and the pipe P11, supplied to the cell stack 102. The rust prevention valve 158 is closed when the cell stack 102 does not generate power, prevents backflow of water vapor into the air pump 148 and thereby prevents rusting of the air pump 148.

The cell stack 102 and the gas-liquid separation radiator 114 are connected with each other by two pipes P12. The radiator 114 and the water tank 132 are connected with each other by two pipes P13. The water tank 132 is provided with a pipe (exhaust pipe) P14. Each of the pipes P12 connects a cathode outlet I4 located on a front surface lower left corner of the cell stack 102 with an inlet 124a (See Fig. 3) of a corresponding radiator pipe 122 which comes out from a lower surface left side end of the radiator 114. Each of the pipes P13 connects an outlet 124b (See Fig. 3) of a corresponding one of the radiator pipes 122 with a front surface upper portion of the water tank 132. The radiator pipes 122 come out of the lower surface of the radiator 114, at a location slightly closer to the center than the left side end. The pipe P14 is connected with a rear surface upper portion of the water tank 132, and is angled so it goes up and then down. Exhaust gas which is discharged from the cathode outlet I4 of the cell stack 102 contains water (liquid water and water vapor) and carbon dioxide. The exhaust gas flows through the pipe P12 into the radiator 114, where water vapor is liquefied. After leaving the radiator 114, the exhaust gas flows together with the water through the pipe P13 into the water tank 132, before discharged to outside via the pipe P14.

The pipes P8 through P14 serve primarily as a flow path for the exhaust gas.

The water tank 132 and the water pump 160 are connected with each other by a pipe P15 whereas the water pump 160 and the aqueous solution tank 130 are connected with each other by a pipe P16. The pipe P15 connects a right side surface lower portion of the water tank 132 with a center portion of the water pump 160. The pipe P16 connects a center portion of the water pump 160 with a left side surface upper corner of the aqueous solution tank 130. By driving the water pump 160, water in the water tank 132 is returned to the aqueous solution tank 130 via the pipes P15, P16.

The pipes P15, P16 serve as a flow path for the water.

The pipe P4 is connected with the pipe P17 which is a pipe formed of Teflon (registered trademark) for example. As shown in Fig. 4, the pipe P17 extends rearward and upward on the left side of the vehicle frame 12, with a greater upward tilt near the end. An ultrasonic sensor 164 is attached to the pipe P17 for measuring methanol concentration in the methanol aqueous solution in the pipe P17. The ultrasonic sensor 164 is used for measuring the methanol concentration of the methanol aqueous solution in the pipe P17, based on the principle that the ultrasonic wave travels at different speeds depending on the concentration of methanol aqueous solution.

As shown in Fig. 4, the ultrasonic sensor 164 serving as a concentration sensor has a transmitter unit 164a which transmits an ultrasonic wave, and a receiver unit 164b which detects the ultrasonic wave. The transmitter unit 164a is inserted into the pipe P4. The transmitter unit 164a has an intake 165 which is connected with a starting end of the pipe P17. Through the intake 165, methanol aqueous solution is introduced into the pipe P17. In the present embodiment, the intake 165 also functions as an intake for introducing gas into the aqueous solution pipe X. At least part of the transmitter unit 164a is higher than the liquid level in the aqueous solution tank 130, and the entire intake 165 is higher than the liquid level in the aqueous solution tank 130. The receiver unit 164b is connected with a tail end of the pipe P17, and is disposed on the left side surface of the secondary battery 134. The ultrasonic wave sensor 164 generates an ultrasonic wave at the transmitter unit 164a, and receives the ultrasonic wave at the receiver unit 164b. The controller 156 detects the methanol concentration of the methanol aqueous solution in the pipe P17, based on the amount of time from the start of ultrasonic wave generation at transmitter unit 164a to the reception of the ultrasonic wave at the receiver unit 164b.

The receiver unit 164b and the measurement valve 138 are connected with each other by a pipe P18 which extends in a rearward and upward direction. The measurement valve 138 and the aqueous solution tank 130 are connected with each other by a pipe P19 which extends downward, along the fuel tank 128. The pipe P18 connects an upper surface of the receiver unit 164b with a left side surface of the measurement valve 138. The pipe P19 connects a right side surface of the measurement valve 138 with an upper surface of the aqueous solution tank 130.

The pipes P17 through P19 serves as a flow path primarily for concentration measurement. In the present embodiment, the pipes P17 through P19 also function as an introduction pipe Y for introducing gas to the intake 165. The introduction pipe Y connects the gas space in the aqueous solution tank 130 with the aqueous solution pipe X.

The aqueous solution tank 130 and the catch tank 140 are connected with each other by a pipe P20. The catch tank 140 and the aqueous solution tank 130 are connected with each other by a pipe P21. The catch tank 140 and the air chamber 150 are connected with each other by a pipe P22. The pipe P20 connects a left side surface upper corner of the aqueous solution tank 130 with a left side surface upper corner of the catch tank 140. The pipe P21 connects a lower end of the catch tank 140 with a left side surface lower corner of the aqueous solution tank 130. The pipe P22 connects a location of a left side surface of the catch tank 140 closer to an upper portion thereof, with an upper end surface of the air chamber 150. When the cell stack 102 generates power, gas (main ingredients are carbon dioxide, gaseous methanol and water vapor) in the aqueous solution tank 130 is supplied to the catch tank 140 via the pipe P20. The gaseous methanol and the water vapor are cooled and liquefied in the catch tank 140, then flows through the pipe P21 back to the aqueous solution tank 130. Gas (carbon dioxide, methanol which was not liquefied and water vapor) in the catch tank 140 is supplied to the air chamber 150 via the pipe P22.

The pipes P20 through P22 constitute a flow path primarily for fuel processing.

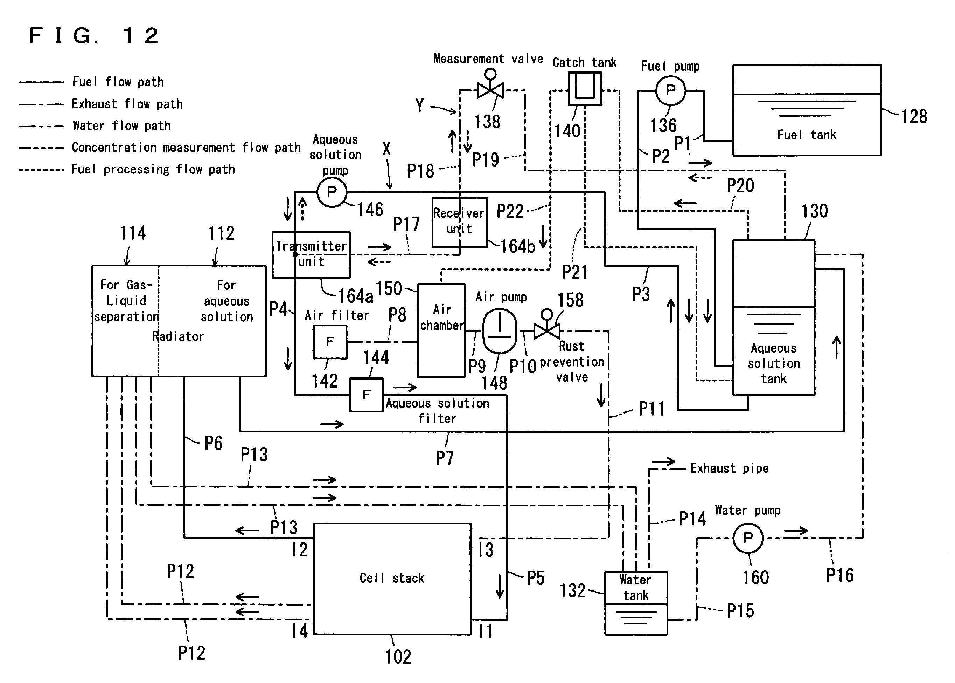

In the present embodiment, the measurement valve 138 which is inserted between the pipes P18 and P19 represents the open/close means. The introduction means includes the measurement valve 138, the aqueous solution pump 146 and the introduction pipe Y. By opening the measurement valve 138, the fuel cell system 100 is set to an open state where the aqueous solution pipe X is open to the gas introduced via the intake 165. By closing the measurement valve 138, the fuel cell system 100 is set to a closed state where the aqueous solution pipe X is closed to the gas introduced via the intake 165. Also, as understood from Fig. 4, the aqueous solution pump 146 is inserted between the pipes P3 and P4, more closely to the aqueous solution tank 130 than the intake 165 in the aqueous solution pipe X. By opening the measurement valve 138 thereby setting the system in the open state and by driving the aqueous solution pump 146 in the reverse rotating direction, gas in the aqueous solution tank 130 is introduced into the aqueous solution pipe X. Specifically, as indicated by broken-line arrows in Fig. 12, the reverse rotation of the aqueous solution pump 146 causes the gas in the aqueous solution tank 130 to be sucked via the pipe P19, and to be introduced into the pipe P4 via the intake 165.

The fuel cell system 100 as described above is started when the main switch 152 is turned ON. The system is controlled by the controller 156, while the secondary battery 134 supplements electric energy, and the DC-DC converter 154 converts a voltage from 24 volts into a 12 volts. The fans 120, 126 are driven by the 12-volt power obtained by the conversion.

Next, a main process of the fuel cell system 100 in operation (power generation) will be described.

When the main switch 152 is turned ON, the fuel cell system 100 drives its components such as the aqueous solution pump 146 and the air pump 148, thereby starting to generate power at the cell stack 102.

As the aqueous solution pump 146 is driven in the normal rotating direction, methanol aqueous solution stored in the aqueous solution tank 130 is sent from the pipe P3 side to the pipe P4 side, into the aqueous solution filter 144. The aqueous solution filter 144 removes impurities from the methanol aqueous solution, then the methanol aqueous solution is sent through the pipe P5 and the anode inlet I1, and then supplied directly to the anode 104b in each of the fuel cells 104 which constitute the cell stack 102.

Meanwhile, as the air pump 148 is driven, air is introduced through the air filter 142 and flows through the pipe P8 into the air chamber 150 where noise is silenced. The air which was introduced and gas which was supplied to the air chamber 150 from the catch tank 140 are supplied via the pipes P9 through P11 and the cathode inlet I3 to the cathode 104c in each of the fuel cells 104 which constitute the cell stack 102.

At the anode 104b in each fuel cell 104, methanol and water in the supplied methanol aqueous solution chemically react with each other to produce carbon dioxide and hydrogen ions. The produced hydrogen ions flow to the cathode 104c via the electrolyte 104a, and electrochemically react with oxygen in the air supplied to the cathode 104c, to produce water (water vapor) and electric energy. Thus, power generation is performed in the cell stack 102. The generated electric energy is sent to and stored at the secondary battery 134, and is used, for example, to drive the two-wheeled vehicle 10.

Carbon dioxide produced at the anode 104b in each fuel cell 104 and unused methanol aqueous solution are heated (up to approximately 65°C-70°C for example) in the electrochemical reaction, and part of the unused methanol aqueous solution is vaporized. The carbon dioxide and the unused methanol aqueous solution flow from the anode outlet I2 of the cell stack 102 into the aqueous solution radiator 112, where they are cooled (down to approximately 40°C for example) by the fan 120 while flowing through the radiator pipe 116. The carbon dioxide and the unused methanol aqueous solution which have been cooled then flow through the pipe P7, and return to the aqueous solution tank 130.

Meanwhile, most of the water vapor occurred on the cathode 104c in each fuel cell 104 is liquefied and discharged in the form of water from the cathode outlet I4 of the cell stack 102, with saturated water vapor being discharged in the form of gas. Part of the water vapor which was discharged from the cathode outlet I4 is cooled and liquefied by lowering the dew point in the radiator 114. The radiator 114 liquefies the water vapor through operation of the fan 126. Water (liquid water and water vapor) from the cathode outlet I4 are supplied via the pipe P12, the radiator 114 and the pipe P13 to the water tank 132 together with unused air.

Also, at the cathode 104c in each fuel cell 104, the vaporized methanol from the catch tank 140 and methanol which has moved to the cathode 104c due to crossover react with oxygen in the platinum catalyst layer, thereby being decomposed to harmless substances of water and carbon dioxide. The water and carbon dioxide which occurred from the methanol are discharged from the cathode outlet I4, and supplied to the water tank 132 via the radiator 114. Further, water which has moved due to water crossover to the cathode 104c in each fuel cell 104 is discharged from the cathode outlet I4, and supplied to the water tank 132 via the radiator 114.

The water collected in the water tank 132 is recycled appropriately by the pumping operation of the water pump 160, through the pipes P15, P16 to the aqueous solution tank 130, and is used as water for the methanol aqueous solution.

While the fuel cell system 100 is in operation, a concentration measurement of methanol aqueous solution is performed regularly (every 10 seconds for example). When performing the concentration measurement, the measurement valve 138 is opened to set the system to the open state, whereby a new body of methanol aqueous solution is introduced from the pipe P4 to the pipe P17 while discharging an old body of methanol aqueous solution for which the concentration measurement is finished from the pipe P17. Then, the measurement valve 138 is closed to bring the system into the closed state thereby trapping methanol aqueous solution in the pipe P17, and the methanol concentration measurement is made to the trapped methanol aqueous solution. Based on the methanol concentration measured as the above, the fuel cell system 100 adjusts the methanol concentration of the methanol aqueous solution which is to be supplied to the cell stack 102. Specifically, methanol fuel in the fuel tank 128 is supplied to the aqueous solution tank 130 and water in the water tank 132 is returned to the aqueous solution tank 130 based on the result of methanol concentration measurement.

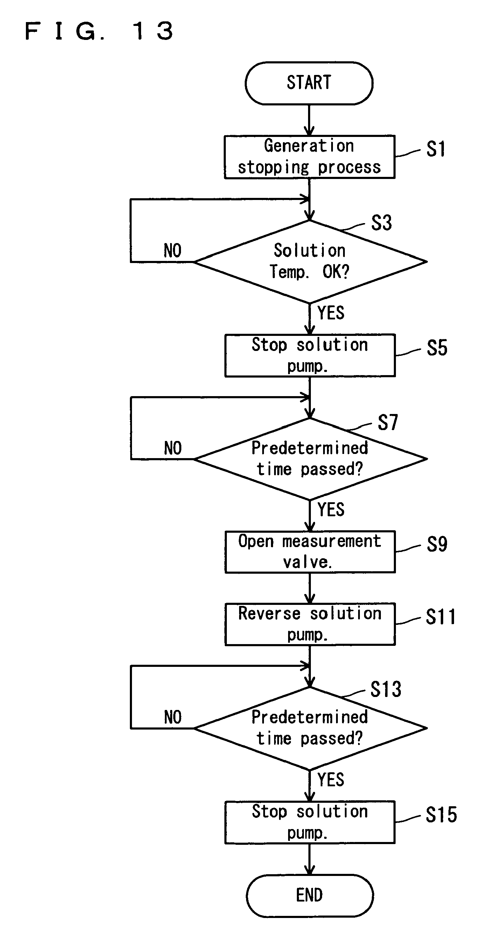

Next, reference will be made to Fig. 13, and description will be made for an operation of the fuel cell system 100 when power generation is stopped.

The fuel cell system 100 starts a power generation stopping process (Step S1) to stop power generation at the cell stack 102 when, for example, a human operator turns OFF the main switch 152 during power generation. In Step S1, the air pump 148 is stopped, the rust prevention valve 158 is closed, electric current from the cell stack 102 is shut off, and the fans 120, 126 are operated at full power, as well as other procedures. The temperature sensor provided in the cell stack 102 measures the temperature of methanol aqueous solution, and the system keeps the aqueous solution pump 146 rotating in the normal direction and waits until Step S3 finds that the methanol aqueous solution has been cooled down to a predetermined temperature (55°C for example) or lower.

Once the temperature of methanol aqueous solution has decreased to or lower than the predetermined temperature (Step S3: YES) the aqueous solution pump 146 and the fans 120, 126 are stopped (Step S5), and the system waits in Step S7 until a predetermined amount of time (5 seconds for example) has passed.

Meanwhile in the cell stack 102, crossover takes place, where methanol aqueous solution moves from the anode 104b through the electrolyte 104a, (oozing) to the cathode 104c. For this reason, even after Step S5, there is a small amount of spontaneous flow of methanol aqueous solution continuously from the aqueous solution tank 130 to the cell stack 102 by siphon effect to compensate for the loss of methanol aqueous solution from the grooves 106a in the cell stack 102 due to the crossover. The siphoning occurs since the siphon, constituted by the pipes P3 through P5, is filled with methanol aqueous solution, the grooves 106a in the cell stack 102 are also filled with methanol aqueous solution, and the aqueous solution pump 146 cannot block the flow of aqueous solution completely.

The predetermined time in Step S7 is preset, taking into account an amount of time necessary for methanol aqueous solution, carbon dioxide, etc. to stop flowing from the anode outlet I2 into the aqueous solution tank 130, an amount of time for the fluid in the aqueous solution tank 130 to become still, and an amount of time for the gas and the methanol aqueous solution to separate from each other in the aqueous solution tank 130.

Thereafter, once the predetermined time has passed (Step S7: YES), the measurement valve 138 is opened to bring the system to the open state (Step S9), and the aqueous solution pump 146 is started to drive in the reverse direction (Step S11) to pump methanol aqueous solution in the pipe P4 back from the pipe P4 side toward the pipe P3 side. This reduces the pressure in the pipe P4, causing methanol aqueous solution which is in the pipes P17, P18 to move through the intake 165 into the pipe P4. The introduction of methanol aqueous solution into the pipe P4 reduces the pressure in the pipes P17-P19. This causes gas in the aqueous solution tank 130 to flow into the pipes P17-P19, while the aqueous solution tank 130 is supplied with methanol aqueous solution sent from the aqueous solution pump 146. Through these events, gas moves through the pipe P19, the measurement valve 138, the pipes P18, P17 and the intake 165, into the pipe P4 and then to the highest portion of the pipe P3 (See Fig. 4 through Fig. 6).

Then, the system waits for a predetermined amount of time (for 5 seconds for example) in Step S13, and once the predetermined time has passed (Step S13: YES), the system stops the aqueous solution pump 146 (Step S15), and brings the power generation stopping operation to an end. The predetermined time in Step S13 is present, taking into account an amount of time necessary for the gas to come to the highest point of the pipe P3.

After the aqueous solution pump 146 is stopped, the temperature of methanol aqueous solution in the aqueous solution tank 130 decreases, which causes gaseous methanol to become liquid and thus causes pressure decrease in the aqueous solution tank 130. As the pressure decreases in the aqueous solution tank 130, air from outside flows via the air filter 142, the pipe P8, the air chamber 150, the pipe P22, the catch tank 140 and the pipe P20, into the aqueous solution tank 130. This prevents the aqueous solution tank 130 from losing pressure, enabling to prevent methanol fuel and water from coming in from the fuel tank 128 and the water tank 132. While the aqueous solution pump 146 is rotating in the reverse direction, gas is introduced from the gas space of the aqueous solution tank 130 into the pipes P17-P19; however, air from outside cannot come in the aqueous solution tank 130 since methanol aqueous solution is introduced into the aqueous solution tank 130 via the pipe P3. In other words, it is possible to introduce low-oxygen gas from the aqueous solution tank 130 into the pipes P17-P19.

In the above-described operation which is performed after power generation is stopped, gas fills at least from the highest portion inside the pipe P3, to a point where the pipe P4 connects with the pipe P17. Therefore the gas in the pipes P3, P4 communicate with the gas in the aqueous solution tank 130 through the pipes P17-P19. This terminates the siphoning.

Note that the introduction of gas in Step S11 is achieved by reverse rotation of the aqueous solution pump 146. Alternatively, the gas may be pressurized so it goes into the aqueous solution pipe X. In this case, the pressurized gas (pressurized air) may be introduced wherever in the aqueous solution pipe X.

In Step S13, methanol concentration measurement may be made at a predetermined time interval for a predetermined amount of time. Once the value of methanol concentration is out of a predetermined range, the process moves to Step S15. If the pipe P17 is filled with gas, there is a change in the traveling speed of ultrasonic wave emitted from the ultrasonic wave sensor 164, and the methanol concentration measurement gives a value which is out of the predetermined range. Or it becomes impossible to measure the methanol concentration. This principle can be used in confirming presence of gas in the highest portion inside the pipe P3, based on the result of methanol concentration measurement. As described, by confirming the presence of gas in the pipes p3, p4 based on the result of methanol concentration measurement, it becomes possible to stop the aqueous solution pump 146 without waiting for the predetermined amount of time, enabling to reduce power consumption.

According to the fuel cell system 100 as described, it is possible to quickly and reliably terminate the siphoning thereby stopping the flow of methanol aqueous solution by forcing gas into the highest portion in the pipe P3 after the power generation stopping process has been started. Further, by rotating the aqueous solution pump 146 in the reverse direction, it is possible to bring methanol aqueous solution which has gone downstream of the highest portion of the pipe P3 (the side closer to the cell stack 102) back to upstream of the highest portion of pipe P3 (the side closer to the aqueous solution tank 130). Therefore, it becomes possible to reduce the amount of methanol aqueous solution which flows out of the aqueous solution tank 130 after power generation is stopped, and to generate power quickly and reliably when the system is re-started. Further crossover after stopping power generation is reduced, which reduces a problematic event that methanol aqueous solution in the cathode 104c is blown out of the system by air which is introduced to the cathode 104c when power generation is re-started. This advantage leads to reduced environmental contamination while enabling to reduce decrease in methanol utilization efficiency.

Further, by introducing gas which is in the aqueous solution tank 130 to the aqueous solution pipe X via the introduction pipe Y, the oxygen concentration of the gas which is supplied to the aqueous solution pipe X is kept at a low level. Therefore, it becomes possible to reduce oxidization at the anode 104b which would lead to production of harmful substances such as aldehyde and formic acid. This advantage offers significant effect especially in cases like the present embodiment, where carbon dioxide which results in the reaction at the anode 104b is returned to the aqueous solution tank 130.

Further, since the air filter 142 removes impurities from the gas before it is introduced into the aqueous solution tank 130, it becomes possible to introduce clean gas into the pipe P4, thereby preventing the impurities from causing damage or failure of the fuel cell system 100.

The present invention, which can reduce the amount of methanol aqueous solution which flows out of the aqueous solution tank after power generation is stopped, is particularly effective to direct methanol fuel cell systems in which there is greater tendency for the methanol aqueous solution to flow out of the aqueous solution tank due to the crossover.

The fuel cell system 100 according to the present invention is able to reduce the amount of methanol aqueous solution which flows out of the aqueous solution tank 130 after power generation is stopped even if the cell stack 102 is disposed at a place lower than the aqueous solution tank 130. Therefore, the present invention is suitable for transportation equipment such as a two-wheeled vehicle 10.

It should be noted that the amount of methanol aqueous solution which flows out of the aqueous solution tank 130 can be reduced by only opening the measurement valve 138 to set to the open state when power generation is stopped. As far as the system is set to the open state, siphoning will create a flow of methanol aqueous solution which will introduce gas from the pipe P17 to the pipe P4, to terminate the siphoning eventually, without the need for reverse rotation of the aqueous solution pump 146. Since the intake 165 is higher than the liquid level in the aqueous solution tank 130, it is easy to introduce gas into the aqueous solution pipe X by only setting the system to the open state.

Note that the introduction means is not limited by the embodiment described above.

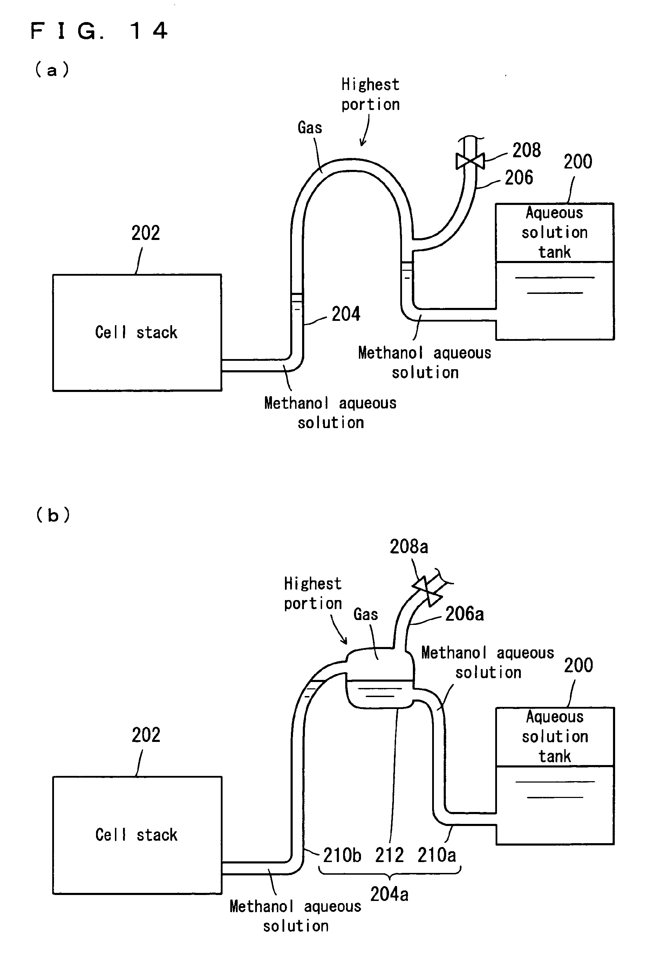

For example, as shown in Fig. 14(a), the aqueous solution tank 200 and a cell stack 202 may be connected with each other by an aqueous solution siphon pipe 204 which is routed to pass a point higher than the liquid level in an aqueous solution tank 200, and an introduction pipe 206 is connected with a more upstream location than the highest portion of the aqueous solution pipe 204 (a location closer to the aqueous solution tank 200). In this case, the introduction pipe 206 and a valve 208 inserted into the introduction pipe 206 constitute the introduction means. By opening the valve 208 to set to the opening state after power generation is stopped, siphoning produces a flow of methanol aqueous solution, which eventually introduces gas from the introduction pipe 206 through the aqueous solution pipe 204, and then to the highest portion of the aqueous solution pipe 204. The gas divides the body of methanol aqueous solution into two portions as viewed from the highest portion of the aqueous solution pipe 204, i.e., an upstream portion and a downstream portion (a portion closer to the cell stack 202), whereupon continuous supply of methanol aqueous solution by siphoning ceases.

The aqueous solution pipe may not entirely be tubular, and may have part of the pipe bulged like a tank. For example, Fig. 14(b) shows an aqueous solution siphon pipe 204a provided by an upstream pipe 210a, a bulge 212 which is provided at the highest portion, and a downstream pipe 210b which extends from a higher point in the bulge 212 than the upstream pipe 210a. The bulge 212 is connected with the introduction pipe 206a. In this case, the introduction pipe 206a, a valve 208a inserted in the introduction pipe 206a and the bulge 212 constitute the introduction means. By opening the valve 208a to set to the opening state after power generation is stopped, siphoning produces a flow of methanol aqueous solution, which eventually introduces gas from the introduction pipe 206a into the bulge 212 which is the highest portion of the aqueous solution pipe, and the siphoning ceases. Since the upstream pipe 210a and the downstream pipe 210b are provided on a lower side and an upper side respectively of the bulge 212, gas which is introduced into the bulge 212 can move quickly into the downstream pipe 210b, to terminate the siphoning swiftly.

The embodiments described above uses a constitution that an aqueous solution pipe is connected with an introduction pipe and a valve is inserted into the introduction pipe; however, the present invention is not limited to this. For example, the aqueous solution pipe may have an intake provided with a plug, and the open state may be achieved by removing the plug from the intake.

Still further, the embodiments described above uses methanol as fuel and methanol aqueous solution as fuel aqueous solution; however the present invention is not limited by this. For example, the fuel may be provided by other alcoholic fuel such as ethanol, and the fuel aqueous solution may be provided by aqueous solution of the alcohol, such as ethanol aqueous solution.

The fuel cell system according to the present invention can be used suitably not only in two-wheeled vehicles but also in automobiles, marine vessels and any other transport equipment.

The present invention is also applicable to fuel cell systems which make use of a reformer. Further, the present invention is applicable to small-scale, stationary-type fuel cell systems.

The present invention being thus far described and illustrated in detail, it is obvious that these description and drawings only represent examples of the present invention, and should not be interpreted as limiting the invention. The spirit and scope of the present invention is only limited by words used in the accompanied claims.

## Claims

1. A fuel cell system comprising:
an aqueous solution tank which stores fuel aqueous solution;
a fuel cell, at least part of its anode being lower than a liquid level in the aqueous solution tank;
an aqueous solution pipe for supplying the anode with the fuel aqueous solution, part of the pipe being higher than the liquid level; and
introduction means for introducing gas into the aqueous solution pipe after starting a power generation stopping process of the fuel cell.

2. The fuel cell system according to Claim 1, wherein the introduction means introduces the gas into the aqueous solution pipe in a predetermined amount of time after starting the power generation stopping process.

3. The fuel cell system according to Claim 1, wherein the aqueous solution pipe is provided with an intake for introducing the gas into the aqueous solution pipe,
the introduction means introducing the gas via the intake into a place within the aqueous solution pipe which is higher than the liquid level in the aqueous solution tank.

4. The fuel cell system according to Claim 1, wherein the introduction means includes open/close means for setting the fuel cell system to an open state where the aqueous solution pipe is open to the gas, or to a closed state where the aqueous solution pipe is not open to the gas,
the gas being introduced into the aqueous solution pipe by causing the open/close means to set the fuel cell system to the open state.

5. The fuel cell system according to Claim 1, wherein the introduction means includes an aqueous solution pump inserted into the aqueous solution pipe at a location closer to the aqueous solution tank than a location where the gas is introduced into the aqueous solution pipe, for pumping the fuel aqueous solution toward the fuel cell or toward the aqueous solution tank,
the gas being introduced into the aqueous solution pipe by controlling the aqueous solution pump to pump the fuel aqueous solution toward the aqueous solution tank.

6. The fuel cell system according to Claim 1, wherein the introduction means includes an introduction pipe which connects a gas space in the aqueous solution tank with the aqueous solution pipe,
the introduction means introducing the gas from within the aqueous solution tank into the aqueous solution pipe via the introduction pipe.

7. The fuel cell system according to Claim 6, further comprising an air filter for removing impurities included in the gas introduced from outside the fuel cell system,
the gas from said outside being introduced into the aqueous solution tank via the air filter.

8. The fuel cell system according to one of Claims 1 through 7, wherein the fuel cell system is a direct methanol fuel cell system.

9. Transportation equipment including the fuel cell system according to one of Claims 1 through 8.

10. A method of controlling a fuel cell system comprising:
an aqueous solution tank which stores fuel aqueous solution; a fuel cell, at least part of its anode being lower than a liquid level in the aqueous solution tank; and an aqueous solution pipe connecting the aqueous solution tank with the fuel cell, part of the pipe being higher than the liquid level;
wherein gas is introduced into the aqueous solution pipe after starting a power generation stopping process of the fuel cell.

11. The method according to Claim 10, wherein the gas is introduced to a place in the aqueous solution pipe higher than the liquid level in the aqueous solution tank.
